Europäisches Patentamt

European Patent Office

Office européen des brevets

(11) Veröffentlichungsnummer: **0 225 846 B1**

(12) **EUROPÄISCHE PATENTSCHRIFT**

(45) Veröffentlichungstag der Patentschrift: **29.01.92**

(21) Anmeldenummer: **86810531.3**

(22) Anmeldetag: **20.11.86**

(51) Int. Cl.⁵: **B29C 45/14**, B29C 45/27

(54) Verfahren und Spritzwerkzeug zur Herstellung eines Kunststoff-Gliederbandes, insbesondere einer Kugelkette.

(30) Priorität: **05.12.85 CH 5185/85**

(43) Veröffentlichungstag der Anmeldung:
**16.06.87 Patentblatt 87/25**

(45) Bekanntmachung des Hinweises auf die
Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
DE-A- 2 633 583
FR-A- 2 245 882
US-A- 2 386 697

(73) Patentinhaber: **EGO KUNSTSTOFFWERK AG**
**Schöntalstrasse 2**
**CH-9450 Altstätten/SG(CH)**

(72) Erfinder: **Liebl, Rudolf**
**Heidenerstrasse 36a**
**CH-9450 Altstätten(CH)**

(74) Vertreter: **Bosshard, Ernst**
**Schulhausstrasse 12**
**CH-8002 Zürich(CH)**

## Beschreibung

Die Erfindung bezieht sich auf ein Verfahren zur Herstellung eines Kunststoff-Gliederbandes, wobei eine Mehrzahl von Gliedern gleichzeitig auf eine flexible Kordel oder ein Kabel mit gegenseitigem Abstand aufgespritzt werden, mindestens ein gemeinsamer länglicher, parallel zur Kordel oder zum Kabel verlaufender Einspritzsteg angeordnet wird von dem quer verlaufende Verbindungsstege seitlich abragen und die Verbindungsstege quer zum Einspritzsteg in die Glieder einmünden, wobei an den Uebergangsstellen zwischen den Verbindungsstegen und den Gliedern je eine Verengung angeordnet wird.

Ferner bezieht sich die Erfindung auf ein Spritzwerkzeug mit zwei voneinander trennbaren Formplatten, wobei diese Formplatten als Mehrfachform für die auf Kordeln oder Kabel aufzuspritzenden Kugeln ausgebildet sind, wobei die Mehrfachform mindestens einen gemeinsamen, länglichen, in Kordel- oder Kabellängsrichtung verlaufenden Einspritzhohlraum aufweist, von dem Seitenkanäle zu den Formen für die zu erzeugenden Glieder führen, wobei diese Seitenkanäle vor dem Eintritt in die Form eine Verengung aufweisen und die Seitenkanäle quer zum Einspritz-Hohlraum verlaufen.

Es sind bereits Kugelketten bekannt, bei denen auf einer flexiblen Kordel in gleichmässigen Abständen Kugeln aufgereiht werden. Solche Kugelketten haben ein breites Anwendungsfeld, namentlich weil sie sich in beliebigen Richtungen umlenken lassen und somit in zahlreichen Fällen für den synchronen Antrieb, Steuerung oder als Kraftübertragungsorgane dienen. Ursprünglich wurden derartige Kugelketten aus Metall hergestellt. Es sind indessen auch Kugeln aus Kunststoff bekannt. Solche Kunststoff-Kugelketten wurden bisher in der Weise hergestellt, dass die Kugeln einzeln auf eine Kordel oder ein Kabel aufgespritzt und hernach die Kordel oder das Kabel jeweils um den vorgegebenen Teilungsabstand weiter transportiert wurde. Dieses Herstellungsverfahren ist sehr langsam und für Massenfabrikation ungeeignet.

Die gleichzeitige Herstellung mehrerer auf eine Kordel oder ein Kabel aufzuspritzende Kugeln in einer Kunststoff-Spritzform scheiterte bisher daran, dass sich infolge des Wärmeschwundes Teilungsfehler ergaben, was namentlich bei einer Verwendung für synchrone Antriebe od.dgl. nicht annehmbar war. Die zum Spritzen zu den einzelnen Kugeln führenden, von einem gemeinsamen Einspritzsteg quer abragenden Verbindungsstege bewirkten nämlich, infolge Schwund in Längsrichtung des Einspritzsteges, dass die im Innern noch nicht völlig erkalteten Kugeln entlang der Kordel bzw. Kabel etwas verschoben wurden, wodurch Teilungsungenauigkeiten an der fertigen Kugelkette entstanden. Je mehr Kugeln gleichzeitig gespritzt wurden, um so grösser wurde die Ungenauigkeit.

Aus der DE-A-26 33 583 ist es beispielsweise zur Herstellung dekorativer Perlschnüre bekannt, ausgehend von einem Hauptanguss-Kanal rechtwinklig abragende Nebenanguss-Kanäle vorzusehen, die in die herzustellenden Kunststoff-Perlen od.dgl. einmünden. An der Einmündungsstelle ist zur Erleichterung der Entfernung der nicht gebrauchten Angüsse eine Verengung vorgesehen. Die sich quer zum Hauptanguss-Kanal erstreckenden Nebenanguss-Kanäle sind relativ und damit weitgehend unbiegsam ausgebildet, sodass sie beim Erkalten durch Schwund des Hauptanguss-Kanales die auf dem Strang noch nicht verfestigten, gespritzten Elemente mitziehen und dadurch Teilungsfehler entstehen.

Die durch die Erfindung zu lösende Aufgabe besteht darin, ein Gliederband, insbesondere eine Kugelkette, mit einer Vielzahl von aus Kunststoff bestehenden Gliedern, insbesondere Kugeln, in einer Mehrfach-Spritzform gleichzeitig rationell herstellen zu können, wobei Teilungsfehler am fertigen Gliederband infolge Materialschwund beim Erkalten vermieden werden.

Das erfindungsgemässe Verfahren mit der diese Aufgabe gelöst wird ist dadurch gekennzeichnet, dass zur Verhinderung einer Kraftübertragung auf die Glieder dünnwandige Verbindungsstege vorgesehen sind, die so schwach und in Längsrichtung des Einspritzsteges biegefähig ausgebildet werden, dass eine Längs-Verschiebung der Glieder auf der Kordel oder dem Kabel als Folge des Wärmeschwundes des Einspritzsteges vermieden werden.

Das erfindungsgemässe Spritzwerkzeug ist dadurch gekennzeichnet, dass die Verengungen als gleichachsige, auf den Kugelmittelpunkt gerichtete Fortsetzungen der Seitenkanäle in die Kugeln einmünden und die Seitenkanäle in Längsrichtung des Einspritzsteges so schwach ausgebildet sind, dass eine Kraftübertragung zur Längs-Verschiebung der Kugeln auf den Kordeln oder den Kabeln infolge Wärmeschwund des Einspritzsteges vermieden wird.

Infolge der dünnwandigen, schwachen, biegefähigen Verbindung zwischen den gespritzten Gliedern, insbesondere Kugeln und den diesen zugeordneten Verbindungsstegen kann vor dem vollständigen Erkalten der Glieder bzw. Kugeln vom relativ massiven Einspritzsteg her infolge seines Materialschwundes keine Verschiebungskraft auf die Glieder bzw. Kugeln in Längsrichtung der Kordel oder des Kabels ausgeübt werden. Wenn die Glieder bzw. Kugeln, kurz nach dem Spritzvorgang infolge ihrer Masse im Innern noch nicht vollständig erkaltet sind und somit die Kordel oder das Kabel noch nicht fest umschliessen, wird durch eine leichte Verbiegung der relativ dünnen Verbindungsstege verhindert, dass in Längsrichtung der Kordel oder des Kabels eine Lageveränderung der Glieder bzw. Kugeln bewirkt werden kann.

In der Zeichnung sind Ausführungsbeispiele der Erfindungsgegenstände dargestellt. Es zeigen:

Fig. 1 eine Ansicht zweier Kugelketten, die mit später abzutrennenden Verbindungsstegen und einem gemeinsamen Einspritzsteg verbunden sind

Fig. 2 eine Draufsicht auf die eine Formplatte des Spritzwerkzeuges

Fig. 3 einen Schnitt nach der Linie III-III in Fig.2

Fig. 4 eine Ausführungsform der Glieder in Form von Tellern

Fig. 5 eine Ausführungsform der Glieder in Form von Gabeln

Fig. 6 eine Ausführungsform der Glieder in Form von Oesen zusammen mit Kugeln.

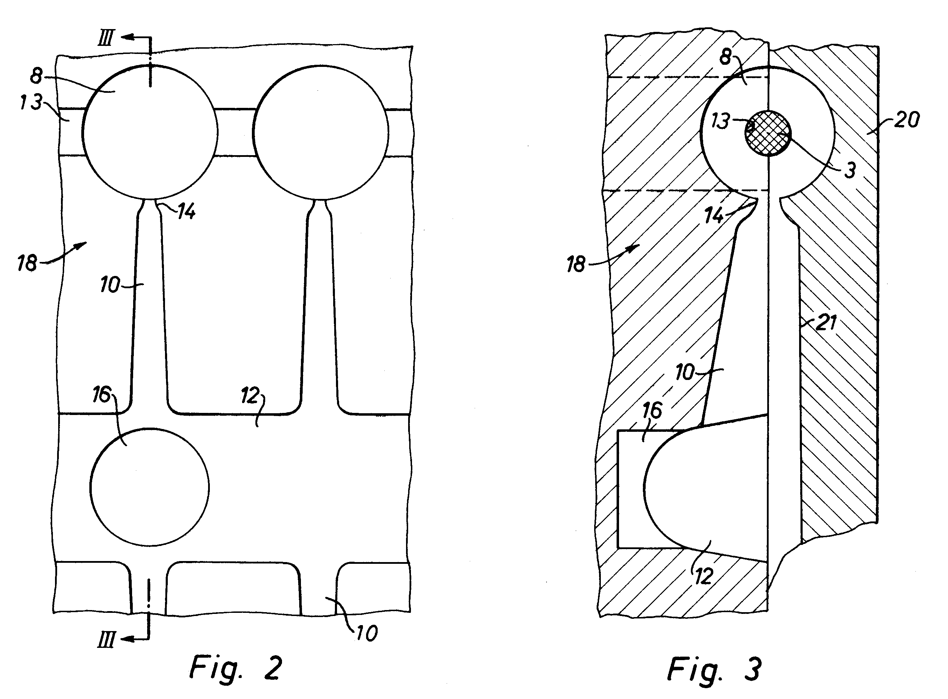

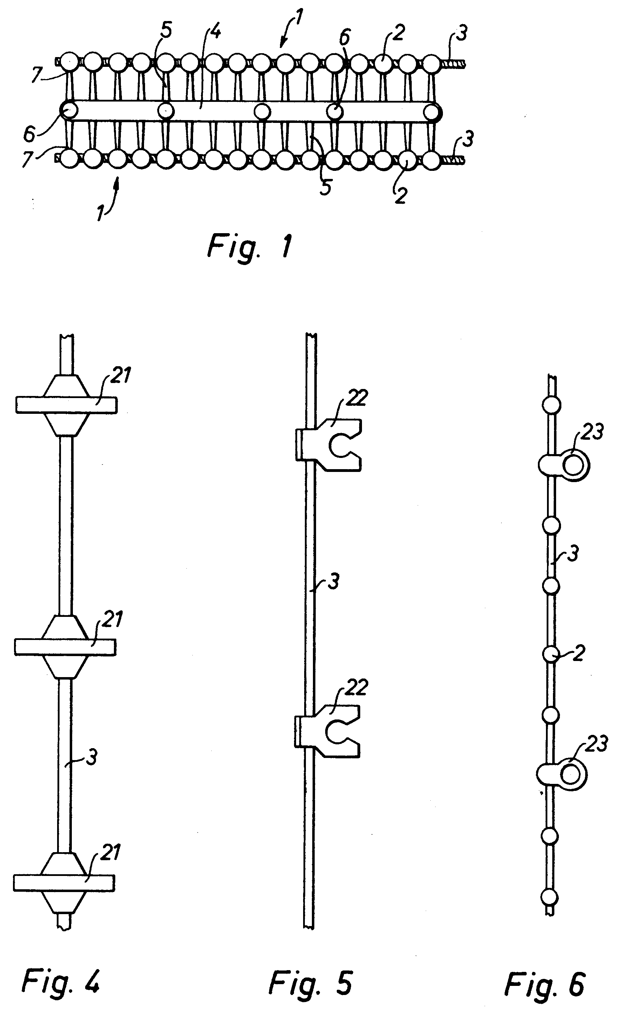

Aus Fig. 1 geht ein Kunststoff-Spritzgussteil 1 hervor, bei dem zwei Kugelketten-Teillängen vorhanden sind, die nach dem Spritzprozess noch an Verbindungsstegen 5 hängen, die ihrerseits mit einem gemeinsamen Einspritzsteg 4 verbunden sind. Die Verbindungsstege 5 werden nach dem Spritzvorgang bei der Verengung 7 unmittelbar bei den Kugeln 2 abgetrennt, und bilden zusammen mit dem Einspritzsteg 4 Abfall, sodass hernach nur die Kugelketten-Teillängen mit den Kordeln 3 zur Verwendung verbleiben. Die Kugeln 2 sitzen nach ihrer vollständigen Erkaltung allein infolge des Wärmeschwundes des Kunststoffes verschiebungsfest auf der Kordel 3.

Die Herstellung erfolgt in der Weise, dass derartige Kunststoff-Spritzgussteile 1 gemäss Fig. 1 - welche somit je eine Mehrzahl von Kugeln 2 enthalten - taktweise gespritzt werden, indem nach einem ersten Spritzvorgang ein entsprechender Vorschub samt Kordel 3 um die Spritzgussteile-Länge erfolgt, sodass die Länge des Gliederbandes praktisch nur durch die Gesamtlänge der Kordel 3 bestimmt ist.

Wie aus den Fig. 2 und 3 hervorgeht, enthält das Mehrfach-Spritzwerkzeug zwei Formplatten 18, 20, in welchen die Gestalt des herzustellenden Spritzgussteiles eingeformt ist. Der Einspritzhohlraum 12 in den beiden Formplatten 18, 20, in welchen aus dem eingespritzten Kunststoff der spätere Einspritz-Steg 4 des Spritzgussteiles 1 gebildet wird, erstreckt sich in Längsrichtung der Kordel 3 bzw. des Hohlraumes 13 zur Aufnahme der Kordel 3. Zur Abstützung des Einspritzsteges in dessen Längsrichtung sind in Abständen voneinander angeordnete zylinderförmige Ausnehmungen 16 im Einspritzhohlraum 12 vorhanden, die im Spritzgussteil Zapfen 6 bilden. Zu jeder kugelförmigen Ausnehmung 8 in den Formplatten 18, 20 führt - vom Einspritzhohlraum 12 ausgehend - je ein Seitenkanal 10. Diese erzeugen im Spritzgussteil die relativ dünnwandigen Verbindungsstege 5. Die Querschnitte dieser angenähert keilförmigen Verbindungsstege 5 nehmen mit zunehmendem Abstand vom Einspritzsteg 4 ab. Unmittelbar vor dem Uebergang in den kugelförmigen Hohraum 8 weisen die Seitenkanäle 10 in den Formplatten eine starke Verengung 14 auf. Die Aufgabe des verbleibenden geringen Querschnittes dieser Verengung 14 besteht darin, während dem Erkalten des Spritzgussteiles 1 und damit beim Wärmeschwund des Einspritzsteges 4 zu vermeiden, dass axiale Kräfte auf die Kugel 2 übertragen werden, welche eine Längsverschiebung der im Innern noch nicht ganz erkalteten Kugel 2 entlang der Kordel 3 nach der Entformung bewirken würden.

Bei einem praktischen Ausführungsbeispiel beträgt der Durchmesser der Verengung 14 weniger als 1/10 des Durchmessers der Kugel 2 und ihr Querschnitt ist geringer als 1 $mm^2$. Bei einem Kugeldurchmesser von 4,5 mm beträgt der verengte Querschnitt noch ca. 1/6 $mm^2$. Der Querschnitt des Einspritzsteges 4 ist wesentlich grösser als der Querschnitt eines Verbindungssteges 5 im unmittelbar anschliessenden Bereich, beispielsweise etwa das Dreifache.

Die zweite Formplatte 20, welche gegen die erste anliegt hat ähnliche Ausnehmungen wie die erste Formplatte 18, mit dem Unterschied, dass die Seitenkanäle 10 und der Einspritzkanal 12 eine flache Schmalseite 21 haben und eine - in der Zeichnung nicht näher dargestellte - Anguss-Stelle zur Zufuhr des unter Druck zuzuführenden, flüssigen Kunststoffes vorhanden ist.

Als Kunststoff für die Kugeln 2 eignen sich beispielsweise Polyamid, Polyester od.dgl.

Jede Kugel 2 wird in ihrer Mitte von einer Kordel 3, vorzugsweise aus synthetischen Fasern durchdrungen. Diese Kordel 3 kann beispielsweise aus Polyamid-, Polyster- oder Polypropylen-Fasern bestehen. Für Spezialzwecke kann auch eine mit diesen Kunststoffen ummantelte Stahllitze oder ein Metallkabel ohne Ummantelung verwendet werden.

An Stelle von Kugeln können die auf die Kordel 3 bzw. Kabel aufgespritzten Glieder eine nahezu beliebige andere Form haben, wie diese in Form von Ausführungsbeispielen aus den Fig. 4 - 6 hervorgehen, nämlich als Teller 21, als Gabeln 22 oder als Oesen 23.

Für eine rationale Herstellung solcher Gliederbänder können im Spritzwerkzeug gleichzeitig nicht nur ein Spritzgussteil 1 mit zwei Kugelkettenteillängen gespritzt werden, sondern es kann als Vier- oder Sechsfach-Werkzeug ausgebildet werden. Zudem ist die Länge nicht auf die in Fig. 1 dargestellte Teillänge beschränkt, sondern diese und damit die Anzahl der gleichzeitig auf eine Kordel 3 aufgespritzten Kugeln 2 oder sonstiger Glieder pro Spritzgussteil 1 ist üblicherweise grösser und beträgt vorzugsweise 40-50 Stück pro Gliederkette.

**Patentansprüche**

1. Verfahren zur Herstellung eines Kunststoff-Gliederbandes, wobei eine Mehrzahl von Gliedern gleichzeitig auf eine flexible Kordel oder ein Kabel mit gegenseitigem Abstand aufgespritzt werden, mindestens ein gemeinsamer länglicher, parallel zur Kordel (3) oder zum Kabel verlaufender Einspritzsteg (4) angeordnet wird, von dem quer verlaufende Verbindungsstege (5) seitlich abragen und die Verbindungsstege (5) quer zum Einspritzsteg (4) in die Glieder (2) einmünden, wobei an den Uebergangsstellen zwischen den Verbindungsstegen (5) und den Gliedern (2) je eine Verengung (7) angeordnet wird, dadurch gekennzeichnet, dass zur Verhinderung einer Kraftübertragung auf die Glieder (2) dünnwandige Verbindungsstege (5) vorgesehen sind die so schwach und in Längsrichtung des Einspritzsteges (4) biegefähig ausgebildet werden, dass eine Längs-Verschiebung der Glieder (2) auf der Kordel (3) oder dem Kabel als Folge des Wärmeschwundes des Einspritzsteges (4) vermieden werden.

2. Spritzwerkzeug mit zwei voneinander trennbaren Formplatten (28), wobei diese Formplatten als Mehrfachform für die auf Kordeln (3) oder Kabel aufzuspritzenden Kugeln (2) ausgebildet sind, wobei die Mehrfachform mindestens einen gemeinsamen, länglichen, in Kordel- oder Kabellängsrichtung verlaufenden Einspritzhohlraum (12) aufweist, von dem Seitenkanäle (10) zu den Formen (8) für die zu erzeugenden Glieder (2) führen, wobei diese Seitenkanäle (10) vor dem Eintritt in die Form (8) eine Verengung (14) aufweisen und die Seitenkanäle (10) quer zum Einspritz-Hohlraum (12) verlaufen, dadurch gekennzeichnet, dass die Verengungen (14) als gleichachsige, auf den Kugelmittelpunkt gerichtete Fortsetzungen der Seitenkanäle (10) in die Kugeln (2) einmünden und die Seitenkanäle (10) in Längsrichtung des Einspritzsteges (4) so schwach ausgebildet sind, dass eine Kraftübertragung zur Längs-Verschiebung der Kugeln (2) auf den Kordeln (3) oder den Kabeln infolge Wärmeschwund des Einspritzsteges (4) vermieden wird.

3. Spritzwerkzeug nach Anspruch 2, dadurch gekennzeichnet, dass vom Einspritzhohlraum (12) ausgehend nach beiden Seiten Seitenkanäle (10) abragen zur gleichzeitigen Herstellung eines Doppel-Gliederbandes.

4. Spritzwerkzeug nach Anspruch 2 oder 3, dadurch gekennzeichnet, dass der Querschnitt der Verengung (7) höchstens 1 mm$^2$, vorzugsweise etwa 1/6 mm$^2$ beträgt.

**Claims**

1. Method for making a synthetic link belt, a plurality of links being injected simultaneously with a mutual spacing onto a flexible cord or cable, at least one common, elongated injection web (4) extending parallel to the cord (3) or to the cable being provided, from which transversely extending connecting webs (5) project laterally and the connecting webs (5) open into the links (2) transversely to the injection web (4), a constriction (7) respectively being disposed at the transition points between the connecting webs (5) and the links (2), characterised in that for preventing a transfer of force to the links (2), thin-walled connecting webs (5) are provided, which are constructed to be so weak and able to bend in the longitudinal direction of the injection web (4) that a longitudinal displacement of the links (2) on the cord (3) or the cable as a result of thermal shrinkage of the injection web (4) is avoided.

2. Injection tool with two mould plates (28) able to be separated from each other, these mould plates being constructed as a multiple mould for the balls (2) to be injected onto cords (3) or cables, the multiple mould comprising at least one common, elongated injection cavity (12) extending in the longitudinal direction of the cord or cable, from which lead side channels (10) to the moulds (8) for the links (2) to be produced, before entering the mould (8) these side channels (10) comprising a constriction (14) and the side channels (10) extending transversely with respect to the injection cavity (12), characterised in that the constrictions (14) open into the balls (2) as coaxial extensions of the side channels (10) directed towards the centre of the ball and the side channels (10) are constructed to be so weak in the longitudinal direction of the injection web (4) that a transfer of force for the longitudinal displacement of the balls (2) on the cords (3) or the cables as a result of thermal shrinkage of the injection web (4) is avoided.

3. Injection tool according to Claim 2, characterised in that starting from the injection cavity (12), side channels (10) project on both sides for the simultaneous production of a double link belt.

4. Injection tool according to Claim 2 or 3, characterised in that the cross-section of the constriction (7) amounts at the most to 1 mm$^2$, preferably to approximately 1/6 mm$^2$.

**Revendications**

1. Procédé de fabrication d'une bande à éléments en matière plastique, qui consiste à mouler par injection, simultanément et à intervalles mutuels, un grand nombre d'éléments sur un cordon ou sur un câble souple, au moins une barrette (4) commune, moulée par injection et de laquelle sont issues des barrettes de liaison (5) transversales s'étendant en longueur parallèlement au cordon (3) ou au câble, les barrettes de liaison débouchant dans les éléments (2) transversalement à la barrette (4) moulée par injection, un rétrécissement (7) étant prévu entre les points de transition entre les barrettes de liaison (5) et les éléments (2), caractérisé en ce que, pour empêcher toute transmission de force aux éléments (2), il est prévu des barrettes de liaison (5) à paroi mince, si faibles et si susceptibles de se courber dans la direction longitudinale de la barrette moulée par injection (4), que tout déplacement longitudinal des éléments (2) sur le cordon (3) ou sur le câble, dû au retrait thermique de la barrette moulée par injection (4), est empêché.

2. Outil de moulage par injection comprenant deux plaques de moule (28) séparables l'une de l'autre, ces plaques de moule étant constituées en moules à empreintes multiples pour les billes à mouler par injection sur des cordons (3) ou sur des câbles, le moule à empreintes multiples comportant au moins une empreinte de moulage par injection (12) commune, s'étendant en longueur dans la direction longitudinale du cordon ou du câble et de laquelle des canaux latéraux (10) conduisent au moule (8) pour les éléments (2) à produire, ces canaux latéraux (10) comportant, avant l'entrée dans le moule (8), un rétrécissement (14) et les canaux latéraux (10) s'étendant transversalement à l'empreinte de moulage par injection (12), caractérisé en ce que les rétrécissements (14) débouchent dans les billes (2) sous la forme de prolongements, de même axe et dirigés sur le centre de la bille, des canaux latéraux et les canaux latéraux (10) si faibles dans la direction longitudinale de la barrette (4) moulée par injection que tout transfert de force donnant un déplacement longitudinal des billes (2) sur les cordons (3) ou sur les câbles, dû au retrait thermique de la barre (4) moulée par injection, est empêché.

3. Outil de moulage par injection suivant la revendication 2, caractérisé en ce que de l'empreinte de moulage par injection (12) font saillie des deux côtés des canaux latéraux (10) pour la fabrication simultanée d'une double bande à éléments.

4. Outil de moulage suivant la revendication 2 ou 3, caractérisé en ce que la section transversale du rétrécissement (7) est d'au plus 1 mm$^2$ et, de préférence, de 1/6 mm$^2$ environ.

Fig. 3

Fig. 2

Fig. 1

Fig. 4

Fig. 5

Fig. 6